Europäisches Patentamt

European Patent Office

Office européen des brevets

(11) Publication number: 0 385 416 A1

# EUROPEAN PATENT APPLICATION

(21) Application number: 90103861.2

(22) Date of filing: 28.02.90

(51) Int. Cl.5: F16F 13/00, B60G 13/00

(30) Priority: 01.03.89 JP 23336/89 U

(43) Date of publication of application:
05.09.90 Bulletin 90/36

(84) Designated Contracting States:
DE FR GB

(71) Applicant: TOKAI RUBBER INDUSTRIES, LTD.
3600, Aza-Utazu, Oaza-Kitatoyama
Komaki-shi Aichi-ken(JP)

(72) Inventor: Miyakawa, Shinji, c/o Tokai Rubber
Ind., Ltd.
3600 Aza-Utazu, Oaza-Kitatoyama
Komaki-shi, Aichi-ken(JP)

(74) Representative: Tiedtke, Harro, Dipl.-Ing. et al
Patentanwaltsbüro Tiedtke-Bühling-Kinne-
Grupe-Pellmann-Grams-Struif Bavariaring 4
Postfach 20 24 03
D-8000 München 2(DE)

(54) Upper support for shock absorber in suspension system.

(57) An upper support for a suspension system, which is interposed between a body of a vehicle and a shock absorber of the vehicle, for elastically connecting the vehicle body and the shock absorber. The cylindrical upper support includes a cylindrical inner rigid member (10), a cylindrical outer rigid member (12) which is disposed radially outwardly of the inner rigid member, at least one annular or cylindrical elastic body interposed between the inner and outer rigid members for elastically connecting these members, the above-indicated at least one elastic body at least partially defining at least one annular fluid chamber (50) filled with a non-compressible fluid, and at least one annular wing member (46) each of which is accommodated in the corresponding fluid chamber, so as to radially extend from one of the inner and outer rigid members toward the other. Each fluid chamber is divided by the corresponding wing member into two sections (50a, 50b) which undergo relative volumetric changes when a vibrational load is applied between the inner and outer rigid members. Further, the corresponding wing member cooperates with the other of the inner and outer rigid members to define a restricted fluid passage (48) which allows the fluid to flow therethrough between the two sections of the fluid chamber.

FIG.1

## UPPER SUPPORT FOR SHOCK ABSORBER IN SUSPENSION SYSTEM

### BACKGROUND OF THE INVENTION

Field of the Invention

The present invention relates in general to an upper support used in a suspension system of a motor vehicle, for elastically connecting a body of the vehicle and a shock absorber of the vehicle, and more particularly to such an upper support which has improved vibration-isolating capability while assuring high steering stability of the vehicle.

Discussion of the Prior Art

In a conventional suspension system of a motor vehicle, a generally cylindrical upper support is usually interposed between a body of the vehicle and a piston rod of a shock absorber which is linked with an axle or arm for supporting vehicle wheels. Such an upper support is adapted to prevent input vibrations received from the wheels through the shock absorber from being transmitted to the vehicle body, for example. The upper support generally consists of a cylindrical inner rigid member to which the piston rod of the shock absorber is fixed, a cylindrical outer rigid member which is disposed radially outwardly of the inner rigid member and fixed to the vehicle body, and an elastic body interposed between the inner and outer rigid members for elastically connecting the two members.

The upper support as described above is required to be given a soft spring characteristic for improved vibration-isolating capability, for the purpose of preventing transmission of the vibrations from the shock absorber toward the vehicle body. At the same time, the upper support is required to exhibit a high degree of stiffness so as to minimize the amount of deformation thereof with respect to a static load applied thereto, for the purposes of avoiding changes in the posture of the vehicle while the vehicle is turning, braked, or rapidly accelerated or decelerated, and thus assuring high steering stability of the vehicle.

To meet the above requirements, the upper support utilizes its dynamic spring or elastic characteristic to enhance the vibration-isolating capability, and its static spring or elastic characteristic to enhance the steering stability of the vehicle.

However, it is extremely difficult for the known upper support to fully satisfy these requirements for the vibration-isolating capability and the steering stability, since the known upper support relies only on the elastic deformation of the elastic body for isolating the input vibrations. Namely, since there is a predetermined correlation between the dynamic and static spring constant characteristics of the elastic body, it is impossible for the upper support to be given a soft dynamic spring characteristic, without exhibiting a soft static spring characteristic. Further, since the upper support in particular is likely to receive a relatively large static load during use, the elastic body must be made of a rubber material having a relatively high static spring constant, which inevitably causes stiffening of the dynamic spring characteristic of the upper support. It is also to be noted that the dynamic spring constant of the elastic body tends to increase with an increase in the frequency of the input dynamic vibrations, while at the same time the upper support should function to insulate relatively high-frequency vibrations, such as road-oriented noises, which have frequencies of several tens or hundreds of herz. Accordingly, the known upper support suffers from an extremely high dynamic spring constant when it is subjected to the middle- to high-frequency vibrations.

### SUMMARY OF THE INVENTION

It is accordingly an object of the present invention to provide an upper support for a suspension system of a motor vehicle, which is capable of exhibiting excellent vibration-isolating capability while assuring high steering stability of the vehicle.

The above object may be accomplished according to the principle of the present invention, which provides an upper support for a suspension system, which is interposed between a body of a vehicle and a shock absorber of the vehicle, for elastically connecting the vehicle body and the shock absorber, comprising: (a) a generally cylindrical inner rigid member to which the shock absorber is fixed; (b) a generally cylindrical outer rigid member which is disposed radially outwardly of the inner rigid member and fixed to the body of the vehicle; (c) at least one annular or cylindrical elastic body interposed between the inner and outer rigid members for elastically connecting the inner and outer rigid members, the at least one elastic body at least partially defining at least one annular fluid chamber which is filled with a non-compressible fluid; and (d) at least one annular wing member each of which is accommodated in the corresponding one of the at least one fluid chamber, so as to radially extend from one of the inner and outer rigid members toward the other of the inner and outer rigid members, such that each the fluid chamber is divided by the corresponding wing member into two sections which undergo relative volumetric changes when a vibrational load is applied between the inner and outer rigid members, and such that the corresponding wing member cooperates with the other of the inner and outer rigid members to define a restricted fluid passage which allows the non-compressible fluid to flow therethrough between the two sections of the fluid chamber.

In the upper support of the present invention constructed as described above, when the vibrations are applied between the inner and outer rigid members, relative displacements between the inner and outer rigid members in their axial directions cause the non-compressible fluid to flow between the two sections of each fluid chamber, through the restricted fluid passage defined between the corresponding wing member and the inner wall of the fluid chamber.

In this arrangement, the present upper support can provide an effectively reduced dynamic spring constant with respect to the input vibrations in a middle- to high-frequency range, based on resonance or flows of the fluid through the restricted fluid passage, without lowering its static spring constant to a great extent. Thus, the upper support of the invention can exhibit excellent vibration-isolating capability while assuring a sufficient degree of steering stability of the vehicle.

In one form of the present invention, the above-indicated at least one elastic body comprises a pair of elastic bodies which are fixed to each other in the axial direction of the upper support. In this case, the pair of elastic bodies have respective annular recesses which are open toward each other in the axial direction, and the above-indicated at least one fluid chamber comprises a fluid chamber which is at least partially defined by the annular recesses.

In another form of the invention, each of the above-indicated at least one wing member extends from the inner rigid member toward the outer rigid member, such that the restricted fluid passage is defined between the outer circumferential surface of the each wing member and the outer rigid member.

In a further form of the invention, the upper support further comprises at least one inner support member and at least one outer support member for supporting the above-indicated at least one elastic body, such that the inner and outer support members are respectively fixed to the inner and outer rigid members to connect the elastic body or bodies to the inner and outer rigid members.

According to one feature of the above form of the invention, each of the above-indicated at least one wing member includes a thin-walled radially inner portion, the radially inner portion being secured to and supported by the corresponding inner support member so that each wing member is located at an axially intermediate portion of the corresponding fluid chamber.

## BRIEF DESCRIPTION OF THE DRAWINGS

The above and optional objects, features and advantages of the present invention will be better understood by reading the following description of a presently preferred embodiment of the invention, when considered in conjunction with the accompanying drawings, in which:

Fig. 1 is an elevational view in axial cross section of one embodiment of a cylindrical upper support constructed according to the present invention;

Fig. 2 is a transverse cross sectional view taken along line 2-2 of Fig. 1; and

Fig. 3 is an elevational view in axial cross section of an intermediate product obtained by vulcanization of a rubber material during manufacture of the upper support of Fig. 1.

## DETAILED DESCRIPTION OF THE PREFERRED EMBODIMENT

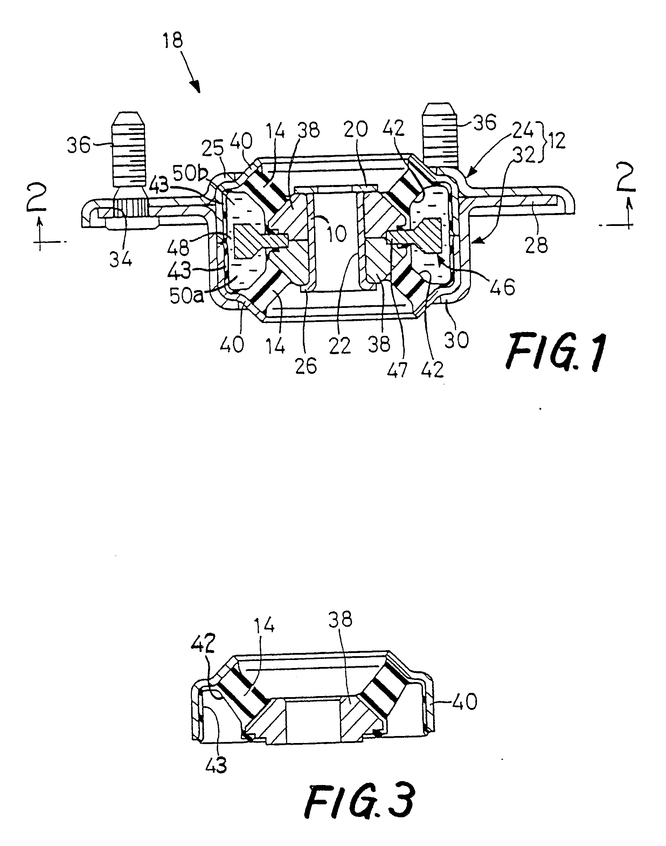

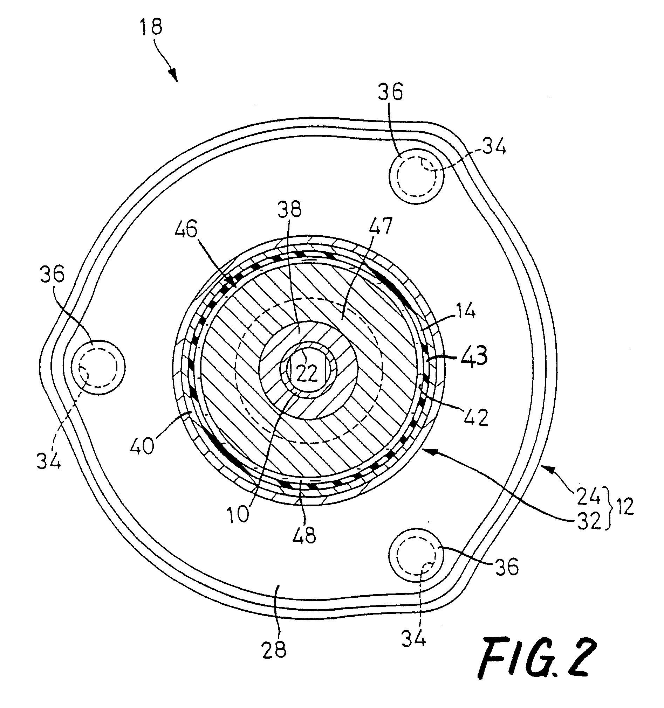

Referring first to Figs. 1 and 2, there is illustrated the preferred embodiment of the invention in the form of a cylindrical upper support 18 used in a rear axle suspension system of a motor vehicle. In these figures, reference numeral 10 denotes a generally cylindrical inner rigid member in the form of an inner metal member, while reference numeral 12 denotes a generally cylindrical outer rigid member in the form of an outer metal member, which is disposed substantially coaxially with and radially outwardly of the inner metal member 10, with a suitable spacing therebetween. Between the inner and outer metal members 10, 12, there are interposed a pair of elastic bodies in the form of generally annular rubber bodies 14, 14 made of a suitable rubber material, which are adapted to elastically connect the inner and outer metal members 10, 12. In the present embodiment, the inner metal member 10 is fixed to a shock absorber (not shown) of the suspension system, while the outer metal member 12 is fixed to the vehicle body. Thus, the instant upper support 18 is interposed between the shock absorber and the vehicle body, for elastically connecting these members in a vibration damping or isolating manner.

More specifically described, the cylindrical inner metal member 10 is formed with an annular metal member 20 welded to its one axial end, to provide an outward flange extending radially outwardly from the one axial end of the inner metal member 10. The inner metal member 10 further includes a caulked portion 26 at the other axial end thereof. In this arrangement, the piston rod of the shock absorber is inserted through and fixedly received in a center bore 22 formed through the inner metal member 10, whereby the inner metal member 10 is attached to the shock absorber.

As described above, the outer metal member 12 is disposed coaxially with and radially outwardly of the inner metal member 10, with a suitable spacing therebetween. The outer metal member 12 consists of a generally annular metal plate 24 and a cylindrical member 32. The cylindrical member 32 includes an outward flange 28 at its one axial end adjacent to the annular metal plate 24, and a caulked portion 30 at the other axial end. The annular metal plate 24 and the cylindrical member 32 are fixed together into the outer metal member 12, such that the outward flange 28 of the cylindrical member 32 and the corresponding outer portion of the metal plate 24 are superposed on and fixed to each other, as shown in Fig. 1. The superposed flange and metal plate 28, 24 have three holes 34 formed therethrough, which are substantially equally spaced apart from each other in the circumferential direction of the upper mount 18. The outer metal member 12 is secured to the vehicle body, by means of mounting bolts 36 which are threaded into the holes 34 of the member 12.

The inner metal member 10 and the outer metal member 12 are integrally and elastically connected to each other, by the pair of rubber bodies 14, 14 interposed therebetween as described above. Each of the rubber bodies 14 is provided with an inner and an outer support metal member 38, 40, which are respectively secured by vulcanization to the inner and outer circumferential surfaces of the rubber body 14, whereby an inner assembly (10, 14, 38, 40) of the upper support 18 is obtained as an intermediate product as shown in Fig. 3. In Fig. 3, only an upper half of the inner assembly is partly shown. The inner and outer support members 38, 40 for supporting one of the rubber bodies 14 are axially superposed on the respective inner and outer support members 38, 40 for supporting the other rubber body 14. The thus superposed inner support members 38, 38 are fitted on the outer circumference of the inner metal member 38, such that the axially opposite end faces of the superposed support members 38, 38 are held in pressed contact with the annular metal member 20 and caulked portion 26 of the inner metal member 10, respectively, whereby the inner support members 38, 38 are supported by the inner metal member 10. On the other hand, the outer support members 40, 40 are fitted in the inner circumference of the outer metal member 12, such that the axially opposite shoulder portions of the superposed support members 40, 40 are held in pressed contact with a radially inner portion 25 of the annular metal plate 24 and the caulked portion 30 of the cylindrical member 32, respectively, whereby the superposed outer support members 40, 40 are supported by the outer metal member 12. Thus, the rubber bodies 14, 14 are interposed between the inner and outer metal members 10, 12, so as to elastically connect these members 10, 12.

Each one of the rubber bodies 14, 14 thus assembled with the inner and outer metal members 10, 12 has an annular recess 42 which is open in the axial direction of the upper support 18 toward the other rubber body 14, and which extends over the entire circumference of the rubber body 14. With the inner assembly (10, 14, 38, 40) assembled in the outer metal member 12, the openings of the annular recesses 42 of the rubber bodies 14, 14 are fluid-tightly closed by sealing rubber layers 43, 43 formed on the inner surfaces of the outer support members 40, 40. Thus, there is formed an annular fluid-tightly enclosed space 50 functioning as a fluid chamber, which extends over the entire circumference of the rubber bodies 14, 14.

The fluid-tightly enclosed space 50 is filled with a suitable non-compressible fluid, such as water, alkylene glycol, polyalkylene glycol and silicone oil. The filling of such a non-compressible fluid is accomplished by effecting the assembling of the inner assembly (10, 14, 38, 40) and the outer metal member 12 within a mass of the non-compressible fluid, for example.

The instant upper mount further includes a ring-like wing member 46 made of metal, a portion of which is accommodated within the fluid chamber 50. The wing member 46 includes a thin-walled radially inner portion 47. With the radially inner portion 47 being gripped by and between the inner support members 38, 38, the wing member 46 is secured to the inner support members 38 and the inner metal member 10, such that the wing member 46 is positioned at the axially intermediate portion of the fluid chamber 50.

The wing member 46 has an outside diameter which is smaller by a predetermined value than the outside diameter of the fluid chamber 50. Namely, the outer circumferential surface of the wing member 46 is opposed to the inner circumferential surfaces of the sealing rubber layers 43, such that the opposed surfaces are spaced from each other by a predetermined radial distance. In this arrangement, there is defined an annular restricted part 48 between the outer circumferential surface of the wing member 46 and the inner circumferential surface of the rubber layers 43, such that the restricted part 48 extends over the entire circumference of the rubber bodies 14, 14. Thus, the fluid chamber 50 is substantially divided by the wing member 46 into a pair of annular sections 50a, 50b, which are located on both sides of the wing member 46 and communicate with each other through the restricted part 48. It will be understood from the above description of the present embodiment that the restricted part 48 constitutes a restricted fluid passage through which the fluid flows between the two sections 50a, 50b upon application of a vibrational load.

In the thus constructed upper support 18, a static load received from the shock absorber is received by the rubber bodies 14, 14. When a dynamic vibrational load is applied from the shock absorber to the upper support 18, the input vibrations bring about periodic relative displacements between the inner and outer metal members 10, 12 in the axial direction of the upper mount 18, to thereby cause the wing member 46 to be displaced within the fluid chamber 50 in the axial direction. As a result, relative volumetric changes occur between the two sections 50a, 50b of the fluid chamber 50, whereby the fluid is forced to flow between these sections 50a, 50b through the restricted part or fluid passage 48 of the fluid chamber 50.

In the manner as described just above, the upper support 18 is capable of providing a sufficiently lowered dynamic spring constant, by utilizing resonance of the mass of the fluid flowing through the restricted part 48 of the fluid chamber 50. The restricted part 48 is tuned to a desired frequency range of the input vibrations by suitably adjusting the cross sectional area and axial length of the restricted part 48, so that the upper support 18 can exhibit a low dynamic spring constant with respect to the input vibrations in that frequency range. The applicant of the present invention has recognized that such an effect of providing a low dynamic spring constant can be obtained with respect to the middle- to high-frequency vibrations having frequencies of several tens or hundreds of hertz. Accordingly, the instant upper support 18 is used to effectively reduce vibrations and noises such as a road-oriented noise during running of the vehicle, thereby assuring improved driving comfort of the vehicle.

The instant upper support 18 can exhibit the low dynamic spring constant as described above, based on the fluid flows which occur upon application of vibrations. Since the low dynamic spring constant contributes only to improvement of the dynamic spring characteristic of the upper support 18 with respect to the input vibrations of a high frequency range, it is possible to provide the rubber bodies 14 with a sufficient degree of static spring stiffness, so as to enable the upper support 18 to cope with the input load received from the shock absorber. Thus, the instant upper support 18 also assures excellent steering stability of the vehicle.

The upper support 18 of the present embodiment has another advantage. That is, the inner and outer metal members 10, 12 are prevented from being excessively displaced relative to each other in radial directions of the upper support 18, by abutting contact of the outer circumferential surface of the wing member 46 with the outer metal member 12 (more precisely, rubber layers 43 covering the inner surface of the outer metal member 12).

While the present invention has been described in its presently preferred embodiment, for illustrative purpose only, it is to be understood that the invention is not limited to the details of the illustrated embodiment, and the invention may be otherwise embodied.

For example, the wing member 46 may be fixed at its outer peripheral portion to the outer metal member 12, so that the wing member protrudes radially inwardly from the outer metal member 12 into the fluid chamber 50, to thereby define a restricted part between the inner circumferential surface of the wing member and the inner wall of the fluid chamber 50 (outer circumferential surface of the inner assembly 10, 14, 16, 38, 40).

The wing member 46 is not necessarily fixedly or rigidly supported by the inner or outer metal member 10, 12 as described above, but may be flexibly supported by the member 10, 12 through an elastic or flexible member, for example.

The wing member 46 may be provided with a cutout or cutouts, or a hole or holes formed therethrough in its axial direction, so that the wing member is adjusted or tuned to a desired frequency range, to permit the upper support 18 to exhibit a relatively low dynamic spring constant with respect to the vibrations in that frequency range.

While the upper support 18 has only one annular fluid chamber 50 in the illustrated embodiment, it is possible to divide such a fluid chamber into a plurality of fluid chambers independent of each other, by means of a suitable partition structure. In this case, the wing member is provided for each of the fluid chambers.

While the pair of rubber bodies 14, 14 are used in the illustrated embodiment, the upper support according to the present invention may employ a single rubber body which takes the form of a sleeve. In this case, the inner circumferential surface of the rubber body is secured by vulcanization to the inner metal member 10. Further, the rubber body has a pocket which is open to the outer circumferential surface thereof, so that the opening of the pocket is closed by the outer metal member 12 to define a fluid chamber between the rubber body and the outer metal member.

Although other specific modified embodiments are not described herein, it will be understood that the invention may be embodied with various other changes, modifications and improvements, which may occur to those skilled in the art, without departing from the spirit and scope of the invention defined in the following claims.

An upper support for a suspension system, which is interposed between a body of a vehicle and a shock absorber of the vehicle, for elastically connecting the vehicle body and the shock absorber. The cylindrical upper support includes a cylindrical inner rigid member (10), a cylindrical outer rigid member (12) which is disposed radially outwardly of the inner rigid member, at least one annular or cylindrical elastic body interposed between the inner and outer rigid members for elastically connecting these members, the above-indicated at least one elastic body at least partially defining at least one annular fluid chamber (50) filled with a non-compressible fluid, and at least one annular wing member (46) each of which is accommodated in the corresponding fluid chamber, so as to radially extend from one of the inner and outer rigid members toward the other. Each fluid chamber is divided by the corresponding wing member into two sections (50a, 50b) which undergo relative volumetric changes when a vibrational load is applied between the inner and outer rigid members. Further, the corresponding wing member cooperates with the other of the inner and outer rigid members to define a restricted fluid passage (48) which allows the fluid to flow therethrough between the two sections of the fluid chamber.

## Claims

1. An upper support for a suspension system, which is interposed between a body of a vehicle and a shock absorber of the vehicle, for elastically connecting the vehicle body and the shock absorber, comprising:

a generally cylindrical inner rigid member (10) to which said shock absorber is fixed;

a generally cylindrical outer rigid member (12) which is disposed radially outwardly of said inner rigid member and fixed to said body of the vehicle;

at least one annular or cylindrical elastic body (14) interposed between said inner and outer rigid members for elastically connecting the inner and outer rigid members, said at least one elastic body at least partially defining at least one annular fluid chamber (50) which is filled with a non-compressible fluid; and

at least one annular wing member (46) each of which is accommodated in the corresponding one of said at least one fluid chamber, so as to radially extend from one of said inner and outer rigid members toward the other of said inner and outer rigid members, such that each said fluid chamber is divided by the corresponding wing member into two sections (50a, 50b) which undergo relative volumetric changes when a vibrational load is applied between said inner and outer rigid members, and such that said corresponding wing member cooperates with said other of the inner and outer rigid members to define a restricted fluid passage (48) which allows said non-compressible fluid to flow therethrough between said two sections of said fluid chamber.

2. An upper support according to claim 1, wherein said at least one elastic body (14) comprises a pair of elastic bodies (14, 14) which are fixed to each other in the axial direction of the upper support.

3. An upper support according to claim 2, wherein said pair of elastic bodies have respective annular recesses (42, 42) which are open toward each other in said axial direction, said at least one fluid chamber (50) comprising a fluid chamber (50) which is at least partially defined by said annular recesses.

4. An upper support according to any one of claims 1-3, wherein each of said at least one wing member extends from said inner rigid member toward said outer rigid member, such that said restricted fluid passage is defined between the outer circumferential surface of said each wing member and said outer rigid member.

5. An upper support according to any one of claims 1-4, further comprising at least one inner support member and at least one outer support member for supporting said at least one elastic body, such that said at least one inner and outer support members are respectively fixed to said inner and outer rigid members to connect said at least one elastic body to the inner and outer rigid members.

6. An upper support according to claim 5, wherein each of said at least one wing member includes a thin-walled radially inner portion, said radially inner portion being secured to and supported by the corresponding inner support member so that said each wing member is located at an axially intermediate portion of the corresponding fluid chamber.

FIG.1

FIG.3

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2572338 (CPIO)<br>* the whole document * | 1-4 | F16F13/00<br>B60G13/00 |
| A | | 5, 6 | |
| | --- | | |
| X | EP-A-44908 (BOGE)<br>* claims 1, 2, 7; figures 1-3 * | 1-3, 5 | |
| | --- | | |
| X | EP-A-255434 (HUTCHINSON)<br>* the whole document * | 1-6 | |
| | --- | | |
| A | EP-A-223712 (HUTCHINSON)<br>* the whole document * | 1-4 | |
| | --- | | |
| P,A | DE-A-3839699 (TOKAI RUBBER)<br>* claim 1; figures 1, 2 * | 1 | |
| | ----- | | |

**TECHNICAL FIELDS SEARCHED (Int. Cl.5)**

F16F
B60G

The present search report has been drawn up for all claims

| Place of search | Date of completion of the search | Examiner |
|---|---|---|
| THE HAGUE | 07 JUNE 1990 | ESPEEL R. |

EPO FORM 1503 03.82 (P0401)